# EUROPEAN PATENT APPLICATION

(11) **EP 0 688 689 A1**
(43) Date of publication of application: **27.12.1995**
(21) Application number: 95304411.2
(22) Date of filing: 23.06.1995
(51) Int. Cl.: B60H 1/00, F24F 9/00

(54) **Air conditioner for a vehicle**

(30) Priority: 23.06.1994 KR 9414462
(71) Applicant: DAEWOO ELECTRONICS CO., LTD, Seoul (KR)
(72) Inventor: Rhee, Harng, Seoul (KR)
(74) Representative: Needle, Jacqueline

(57) **Abstract**

An air conditioner (1) for a vehicle is arranged to cool or heat the interior (524) of the vehicle. The air conditioner (1) includes an air conditioning part (500) which selectively cools or heats intake air. The cooled or heated intake air may be supplied to an air curtain forming apparatus (900). In the air curtain forming apparatus (900), the cooled or heated air enters an air feeder (10) from the air conditioning part and is discharged to an air curtain forming part (30) arranged in a number of positions within the interior (524) of the vehicle. The air discharged from the air curtain forming part (30) is sprayed to form an air curtain by an air spray nozzle part (30a) and air suction nozzle part (30b). The sprayed air is admitted to an air-exhaust part (60) to be recirculated to the air feeder (10) or to be discharged externally. A microprocessor (800) controls the air conditioning part (500) and the air curtain forming apparatus (900) in response to various control signals from a temperature operation controlling part (600), a temperature recognition sensor (700) and a mode selector (950). The air curtains discharged by the air curtain forming part (30) effectively partition the interior (524) of the vehicle into zones and individual ones of the zones may be selectively heated or cooled by the air conditioning part (500) very efficiently.

## Description

The present invention relates to an air conditioner for a vehicle.

Generally, a vehicle is equipped with an air conditioner for cooling and/or heating the internal space thereof to a suitable temperature. For example, U.S. Patent No. 5,176,201 discloses an air conditioner for an automobile having a manually-operated bypass door. U.S. Patent No. 5,279,459 describes an air conditioner for an automobile for supplying additionally heated air to the driver's seat or to passenger seats of the automobile to variably regulate the internal temperature thereof.

However, conventional air conditioners for vehicles cool or heat the overall internal space of the vehicle. This means that a great deal of time is required before a driver or a passenger feels the preset temperature. Moreover, when only the driver or a few persons are aboard, cooling or heating the whole internal space of the vehicle results in a significant energy loss.

It is an object of the present invention to provide an air conditioner for a vehicle which reduces the problems identified.

According to a first aspect of the present invention there is provided an air conditioner for a vehicle comprising an air conditioning unit for conditioning air and discharging the conditioned air, and an air feeding unit for receiving the conditioned air discharged by said air conditioning unit and feeding said conditioned air to the interior of a vehicle, wherein said air feeding unit is arranged to supply air selectively to one or more of a plurality of zones within the interior of the vehicle.

An air conditioner according to an embodiment of the present invention is able to cool or heat only a specific zone within the vehicle to thereby increase the efficiency of the cooling and heating.

The air conditioning unit may be arranged to condition the air by cooling it or by heating it. Preferably, however, the air conditioning unit is provided with the capability to both heat and cool air as required.

In an embodiment, the air feeding unit preferably comprises air curtain forming apparatus having an air supply duct and a corresponding air receiving duct spaced from and facing said air supply duct, wherein said air receiving duct has suction means arranged to draw air from said air supply duct to said air receiving duct. For example, a plurality of air spray nozzles are provided in said air supply duct. The air feeding unit is enabled to form an air curtain within the vehicle which is capable of cooling or heating the interior thereof promptly.

In an embodiment, the air conditioner further comprises sensing means for monitoring the temperature in the interior of a vehicle and/or recognising the position of a passenger in the interior of a vehicle, wherein said air conditioning unit is arranged to condition air in response to an output from said sensing means.

The present invention also provides an air conditioner for forming an air curtain which includes an air conditioning part for drawing in outside air, cooling or heating the drawn air, and discharging the cooled or heated air. The discharged cooled or heated air flows into an air curtain apparatus for spraying the cooled or heated air at plural positions or a specific position in the interior of a vehicle to form the air curtains for performing the cooling or heating operation. Also, a temperature/recognition sensor monitors the temperature of the interior of the vehicle to output a temperature information signal, and monitors the position of a passenger in the interior of the vehicle to output a passenger recognition signal. A mode selector controls the discharge of the cooled or heated air of the air conditioning part, and generates a mode control signal for controlling the spraying position for forming the air curtain in the air curtain forming apparatus. A temperature/operation controlling part outputs an air-amount regulation signal for regulating the amount of the air to flow into the interior of the vehicle, a cooling/heating selection signal for selecting the cooling or heating of the air drawn to the air conditioning part, and a preset temperature signal for setting a cooling temperature or heating temperature of the drawn air. An air-conditioner controlling part receives the temperature information signal and passenger recognition signal of the temperature/recognition sensor, the mode control signal of the mode selector, the air-amount regulation signal, cooling/heating selection signal and preset temperature of the temperature/operation controlling part to control the air conditioning part and air curtain forming apparatus.

In an embodiment, the air conditioning part comprises an air conditioning duct having an air inlet on one end thereof and a plurality of air outlets on the other end thereof for admitting the air from outside, and discharging the admitted air to the air curtain forming apparatus; a first blower arranged to be opposite to the air inlet for drawing in the air from outside; an evaporator arranged on the rear of the first blower for cooling the admitted air during performing the cooling operation; a heater arranged on the rear of the evaporator for heating the admitted air during performing the heating operation; and a plurality of dampers for controlling the air flow in the air conditioning duct, and regulating the amount of the air discharged from the air conditioning duct.

The air conditioning duct may include a cool-air outlet between the evaporator and heater, and a warm-air outlet and a plurality of air outlets on the rear of the heater, the cool-air outlet and warm-air outlet respectively being connected to a cool-air intake conduit and a warm-air intake conduit connected to the air curtain forming apparatus, the plurality of air outlets being connected to the interior of the vehicle.

The air curtain forming apparatus may comprise an air feeding part for drawing in the cooled or heated air from the air conditioning part or outside, and discharging the drawn air to a plurality of passageways; an air spray nozzle part for admitting the air discharged from the plurality of passageways via a corresponding plurality of passageways, and spraying the admitted air at the plural positions of the interior of the vehicle to form the air curtain; an air suction nozzle part arranged in the interior of the vehicle to be opposite to the air spray nozzle part, and drawing in the air sprayed from the air spray nozzle part in the air curtain to discharge the air to a plurality of passageways; an air exhausting part for admitting the air discharged from the plurality of passageways of the air suction nozzle part, and recirculating the admitted air to the air feeding part or externally discharging the admitted air; a plurality of first automatic opening/closing parts installed between the plurality of passageways of the air feeding part and the plurality of passageways of the air spray nozzle part for opening or closing the air flow from the air feeding part to the air spray nozzle part for each passageway; and a plurality of second automatic opening/closing parts installed between the plurality of passageways of the air suction nozzle part and the plurality of passageways of the air exhausting part for opening or closing the air flow from the air suction nozzle part to the air exhausting part for each passageway.

The air feeding part may be comprised of an air-supply duct having a first inlet for admitting the air from outside in one end, second and third inlets for admitting the cooled and heated air in one side, a fourth inlet for drawing in the air from the air exhausting part in the other side, and a chamber at the other end thereof, the chamber having a plurality of air branch holes in a side wall thereof; first, second and third dampers for respectively opening and closing the first, second and third inlets; a second blower installed between the first, second, third and fourth inlets and the chamber for drawing in the air; and a plurality of first air branch tubes respectively connected to the plurality of air branch holes of the air-supply duct.

Preferably, the air spray nozzle part comprises a plurality of air branch tubes for forming passageways correspondent to the plurality of first air branch tubes via the plurality of first automatic opening/closing parts; and a plurality of air spray nozzles respectively connected to the plurality of second air branch tubes, and installed to the plural positions of the interior of the vehicle.

The plurality of air spray nozzles may be respectively arranged over the doors in the interior of the vehicle, between a driver's seat and an assistant driver's seat, between the driver's seat and a rear seat, and between the assistant driver's seat and rear seat.

The plurality of air spray nozzles respectively may be an elongated hollow body having an opening lengthwisely opened in one side, an air suction hole connected to one of the plurality of second air branch tubes in the central upper portion, and a neck portion lengthwisely provided on a prescribed portion thereof.

The air suction nozzle part may comprise a plurality of air suction nozzles arranged to the interior of the vehicle to be opposite to the plurality of air spray nozzles; and a plurality of third air branch tubes respectively connected to the plurality of air suction nozzles for discharging the air drawn from the plurality of air suction nozzles.

The plurality of air suction nozzles respectively may comprise a plurality of air suction holes in the upper portion, and an exhaust hole connected to one of the plurality of air branch tubes in the bottom centre portion.

In an embodiment, the air exhausting part comprises a discharge duct having a chamber with a side wall including a plurality of air branch holes on one end thereof, and a first exhaust opening for externally discharging the air and a second exhaust opening connected to a circuitous tube for recirculating the air to the air feeding part on the other end thereof; first, second and third dampers for selectively opening and closing the first and second exhaust openings; a third blower installed between the first and second exhaust openings and the chamber for discharging the air; and a plurality of fourth air branch tubes respectively connected to the plurality of second automatic opening/closing parts, and then the plurality of air branch holes of the discharge duct for forming a plurality of passageways.

The present invention also extends to an air conditioner for forming an air curtain comprising:
an air conditioning part for drawing in outside air, cooling or heating the drawn air, and discharging the cooled or heated air, said air conditioning part comprising:
an air conditioning duct having an air inlet on one end thereof and a plurality of air outlets on the other end thereof for admitting the air from outside, and discharging said admitted air to said air curtain forming apparatus;
a first blower arranged to be opposite to said air inlet for drawing in said air from outside;
an evaporator arranged on the rear of said first blower for cooling said admitted air during performing said cooling operation;
a heater arranged on the rear of said evaporator for heating said admitted air during performing said heating operation; and
a plurality of dampers for controlling the air flow in said air conditioning duct, and regulating the amount of said air discharged from said air conditioning duct;
an air curtain forming apparatus for admitting said cooled or heated air discharged from said air conditioning part, and spraying said cooled or heated air at plural positions or a specific position of an interior of a vehicle to form said air curtain for performing the cooling or heating operation, said air curtain forming apparatus comprising:
air feeding part for drawing in said cooled or heated air from said air conditioning part or outside, and discharging said drawn air to a plurality of passageways;
an air spray nozzle part for admitting said air discharged from said plurality of passageways via a corresponding plurality of passageways, and spraying said admitted air at said plural positions of said interior of said vehicle to form said air curtain;
an air suction nozzle part arranged in said interior of said vehicle opposite to said air spray nozzle part, and drawing in said air sprayed from said air spray nozzle part in said air curtain to discharge said air to a plurality of passageways;
an air exhausting part for admitting said air discharged from said plurality of passageways of said air suction nozzle part, and recirculating said admitted air to said air feeding part or externally discharging said admitted air;
a plurality of first automatic opening/closing parts installed between said plurality of passageways of said air feeding part and said plurality of passageways of said air spray nozzle part for opening or closing the air flow from said air feeding part to said air spray nozzle part for each passageway; and
a plurality of second automatic opening/closing parts installed between said plurality of passageways of said air suction nozzle part and said plurality of passageways of said air exhausting part for opening or closing the air flow from said air suction nozzle part to said air exhausting part for each passageway;
a temperature/recognition sensing part for monitoring a temperature of said interior of said vehicle to output a temperature information signal, and monitoring the position of a passenger in said interior of said vehicle to output a passenger recognition signal;
a mode selecting part for controlling the discharge of said cooled or heated air of said air conditioning part, and controlling the spraying position of said air curtain of said air curtain forming apparatus;
a temperature/operation controlling part for outputting an air-amount regulation signal for regulating the amount of the air admitted to said interior of said vehicle, a cooling/heating selection signal for selecting the cooling or heating of said air drawn to said air conditioning part, and a preset temperature signal for setting a cooling temperature or heating temperature of said drawn air; and
an air-conditioner controlling part for receiving said temperature information signal and passenger recognition signal of said temperature/recognition sensing part, said mode control signal of said mode selecting part, said air-amount regulation signal, cooling/heating selection signal and preset temperature signal of said temperature/operation controlling part to control said air conditioning part and air curtain forming apparatus.

In an embodiment, said air conditioning duct comprises a cool-air outlet between said evaporator and heater, and a warm-air outlet and a plurality of air outlets on the rear of said heater, said cool-air outlet and warm-air outlet respectively being connected to a cool-air intake conduit and a warm-air intake conduit connected to said air curtain forming apparatus, said plurality of air outlets being connected to said interior of said vehicle.

Preferably, said air feeding part comprises:
an air-supply duct having a first inlet for admitting said air from outside in one end, second and third inlets for admitting said cooled and heated air in one side, a fourth inlet for drawing in said air from said air exhausting part in the other side, and a chamber at the other end thereof, said chamber having a plurality of air branch holes in a side wall thereof;
first, second and third dampers for respectively opening and closing said first, second and third inlets;
a second blower installed between said first, second, third and fourth inlets and said chamber for drawing in said air; and
a plurality of first air branch tubes respectively connected to said plurality of air branch holes of said air-supply duct.

Said air spray nozzle part may comprise:
a plurality of air branch tubes for forming passageways correspondent to said plurality of first air branch tubes via said plurality of first automatic opening/closing parts; and
a plurality of air spray nozzles respectively connected to said plurality of second air branch tubes, and installed to said plural positions of said interior of said vehicle.

In an embodiment, said plurality of air spray nozzles are respectively arranged over the doors in said interior of said vehicle, between a driver's seat and an assistant driver's seat, between said driver's seat and a rear seat, and between said assistant driver's seat and rear seat.

Preferably, said plurality of air spray nozzles respectively is an elongated hollow body having an opening lengthwisely opened in one side, an air suction hole connected to one of said plurality of second air branch tubes in the central upper portion, and a neck portion lengthwisely provided on a prescribed portion thereof.

Said air suction nozzle part may comprise:
a plurality of air suction nozzles arranged to said interior of said vehicle to be opposite to said plurality of air spray nozzles; and
a plurality of third air branch tubes respectively connected to said plurality of air suction nozzles for discharging said air drawn from said plurality of air suction nozzles.

For example, said plurality of air suction nozzles respectively includes a plurality of air suction holes in the upper portion, and an exhaust hole connected to one of said plurality of air branch tubes in the bottom centre portion.

Preferably, said air exhausting part comprises:
a discharge duct having a chamber with a side wall including a plurality of air branch holes on one end thereof, and a first exhaust opening for externally discharging said air and a second exhaust opening connected to a circuitous tube for recirculating said air to said air feeding part on the other end thereof;
first, second and third dampers for selectively opening and closing said first and second exhaust openings;
a third blower installed between said first and second exhaust openings and said chamber for discharging said air; and
a plurality of fourth air branch tubes respectively connected to said plurality of second automatic opening/closing parts, and then said plurality of air branch holes of said discharge duct for forming a plurality of passageways.

According to the present invention, a zone to be cooled or heated is set in the internal space of a vehicle, the set zone is separated from the other zones by means of the air curtain, and the preset corresponding zone is cooled or heated by the air conditioner. Therefore, unnecessary cooling or heating of other zones are not required while securing a preset room temperature of the vehicle within a short time. Further, the internal space may be separated into a smoking zone and a non-smoking zone to create a pleasant indoor atmosphere as well as to preserve a passenger's health.

Embodiments of the present invention will hereinafter be described, by way of example, with reference to the accompanying drawings, in which:
Figure 1 is a schematic block diagram of an air conditioner for forming an air curtain according to one embodiment of the present invention;
Figure 2 shows the mutual connections of elements of the air conditioner of Figure 1;
Figure 3 is a detailed view of an air curtain forming apparatus of the air conditioner of Figure 1;
Figure 4 illustrates the formation of an air curtain utilizing an air spray nozzle and an air suction nozzle;
Figure 5 shows schematically the interior of a vehicle and illustrates its partition into a plurality of zones; and
Figure 6 shows schematically a substantially conventional air conditioner.

Figure 6 is a schematic view of a substantially conventional air conditioner 100 having an air conditioning duct 110 with an air inlet 101 for receiving air. A blower 112 is mounted in the air conditioning duct 110 opposite to the air inlet 101. An evaporator 114 connected to a freezer (not shown) is arranged to the rear of the blower 112. A heater 116 is arranged to the rear of the evaporator 114. A plurality of air jet outlets 118 for ejecting the air is provided to the rear of the heater 116. A plurality of dampers 120 is mounted to open and close passageways led by the blower 112, the evaporator 114, heater 116 and respective air jet outlets 118. Air conditioner 100 is further provided with a temperature/operation selector 122 for setting a temperature within a vehicle and outputting a preset temperature signal and an operation condition signal upon the selection of the operational status, such as cooling or heating. In addition, a temperature detection sensor 125 is installed for monitoring the internal temperature of the vehicle to generate a temperature information signal. The preset temperature signal, operation condition signal and temperature information signal are inputted to a microprocessor 130. The microprocessor 130 automatically controls blower 112, evaporator 114, heater 116 and dampers 120 in accordance with the inputted signals. In other words, the evaporator 114 or the heater 116 is operated by the microprocessor 130, and the air supplied from the blower 112 is cooled or heated to the preset temperature to be supplied to a louver (not shown) mounted to the front and rear frames of the vehicle by way of the air jet outlets 118, thereby cooling and heating the internal space of the vehicle.

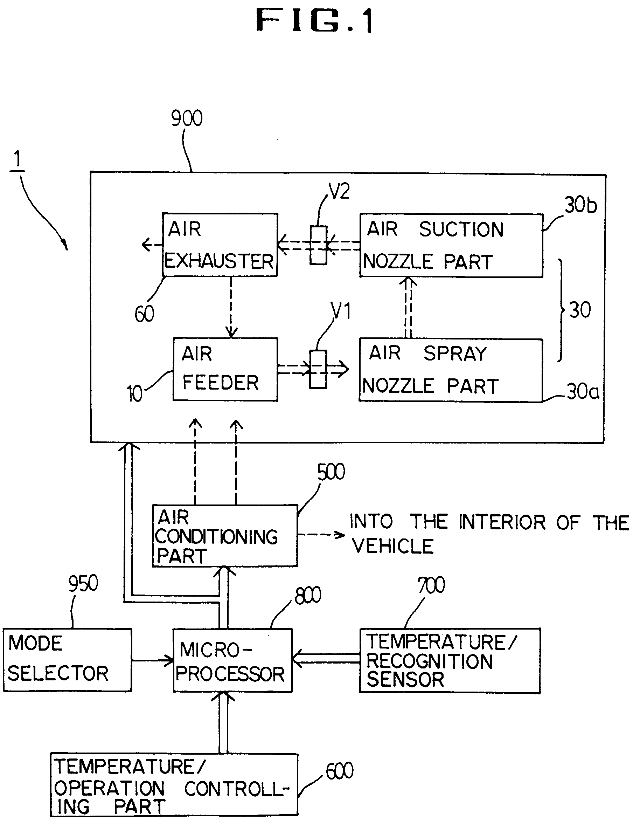

Referring to Figure 1, an air conditioner according to one embodiment of the present invention will be described in detail.

As shown in Figure 1, an air conditioner 1 comprises an air conditioning part 500 for drawing in outside air, cooling or heating the drawn air, and discharging the cooled or heated air. The cooled or heated air from air conditioning part 500 flows into an air feeder 10 of an air curtain forming apparatus 900. The cooled or heated air entering the air feeder 10 is discharged to an air curtain forming part 30 arranged on plural positions within the interior of a vehicle. The discharged air is ejected to form an air curtain by means of an air spray nozzle part 30a and an air suction nozzle part 30b. The ejected air is admitted to an air exhauster 60, which is then circulated again to the air feeder 10 or externally expelled. A microprocessor 800 receives various control signals from a temperature/operation controlling part 600, a temperature recognition sensor 700 and a mode selector 950 to control the air conditioning part 500 and the air curtain forming apparatus 900.

Reference numerals V1 and V2 denote first and second automatic opening/closing valves, respectively. Solid-lined arrows designate flows of electric signals, and dotted-lined arrows designate air flows in the air conditioner 1.

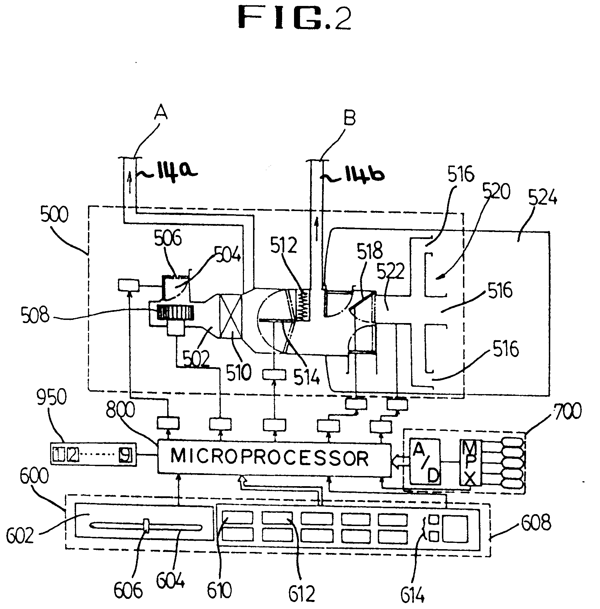

Figure 2 illustrates the mutual connection of the air conditioning part 500, the temperature/recognition sensor 700, the mode selector 950, the temperature/operation controlling part 600 and the microprocessor 800 which is an air-conditioner controlling part.

As shown in Figure 2, the air conditioning part 500 has an air conditioning duct 502 for guiding air flow when drawing in and discharging the air. The air conditioning duct 502 includes an air inlet 504, and an air ejecting portion 520 one end of which has one air outlet 522 and the other end of which has a plurality of air outlets 516. The outside air is admitted via the air inlet 504 of the air conditioning duct 502. A pivotally operating damper 506 is installed at the air inlet 504 to open or close the air inlet 504, thereby admitting or blocking air inflow from the air inlet 504. A blower 508 is mounted within the air conditioning duct 502 to be opposite to the air inlet 504. Once the blower 508 begins to operate with the air inlet 504 open, outside air is drawn to the inside of the air conditioning duct 502 by means of the blower 508. An evaporator 510 connected to a freezer (not shown) is disposed to the rear of the blower 508. The drawn air passes through the evaporator 510. The air drawn while operating the evaporator 510 is thereby cooled by way of the evaporator 510, whereas air drawn whilst the evaporator 510 is not operated is not cooled through evaporator 510. A heater 512 is positioned to the rear of the evaporator 510, and a damper 514 is pivotally installed to one side of the heater 512. The drawn air is selectively passed through a path with or without the heater 512 by the operation of the damper 514. When the air cooled by the evaporator 510 flows, damper 514 blocks the flow of the cooled air into the heater 512. Therefore, the cooled air flows in the rear direction without passing through the heater 512. When the drawn air is heated, the heater 512 is operated whilst the evaporator 510 is not operated. Accordingly, the drawn air passes through the evaporator 510 intact, and passes through the heater 512 by the operation of the damper 514 to be heated by the heater 512. Air outlet 522 of the air conditioning duct 502 is disposed to the rear of the heater 512. A pivotally mounted damper 518 is installed at the air outlet 522 and opens or closes the air outlet 522 by the pivotal swinging to discharge cooled or heated air or block the air discharge. The air discharged via the air outlet 522 flows into the interior 524 of the vehicle via a plurality of air outlets 516. The air entering via the air inlet 504 may be discharged to the interior 524 of the vehicle via a plurality of air outlets 516 without being cooled or heated. Additionally, the air conditioning duct 502 is provided with a cool-air intake conduit 14a and a warm-air intake conduit 14b. Cool-air intake conduit 14a is connected between evaporator 510 and heater 512, and warm-air intake conduit 14b is between heater 512 and air outlet 522.

Air conditioner 1 for forming the air curtain includes temperature/operation controlling part 600 for controlling a desired temperature to be maintained in the interior of the vehicle and an operational state such as cooling and heating. The temperature/operation controlling part 600 may be a typical controller for the air conditioner. The temperature/operation controlling part 600 outputs to the microprocessor 800 a temperature setting signal and an operation setting signal generated in accordance with inputs of the desired temperature and operational state of cooling and heating. Also, the air conditioner 1 includes the temperature/recognition sensor 700 for outputting a temperature information signal by monitoring the temperature of the interior 524 of the vehicle, and a passenger recognition signal by monitoring the position of a passenger within the vehicle. The temperature information signal and passenger recognition signal from the temperature/recognition sensor 700 are supplied to the microprocessor 800.

The temperature/operation controlling part 600 comprises an air amount regulator 602 for regulating the amount of air entering the interior 524 of the vehicle. A knob 606 of the air amount regulator 602 moves right to left or vice versa along a slit 604. An electric signal is generated by this movement of the knob 606, which is in turn supplied to the microprocessor 800. Furthermore, the temperature/operation controlling part 600 has a temperature/operation controller 608 for controlling the cooling and heating operation for the interior 524 of the vehicle. The temperature/operation controller 608 includes an automatic-control input button 610, a cooling/heating selection button 612 and a temperature setting button 614.

The input button types of the temperature/operation controller 608 may be the same as those of a typical temperature/operation controller. The microprocessor 800 is connected to mode selector 950 which has nine mode buttons from mode 1 to mode 9. When a mode button of the mode selector 950 is selected, the mode selector 950 generates a corresponding electric signal. The generated electric signal is received into the microprocessor 800 which controls the air conditioner 1 in accordance with the received electric signal.

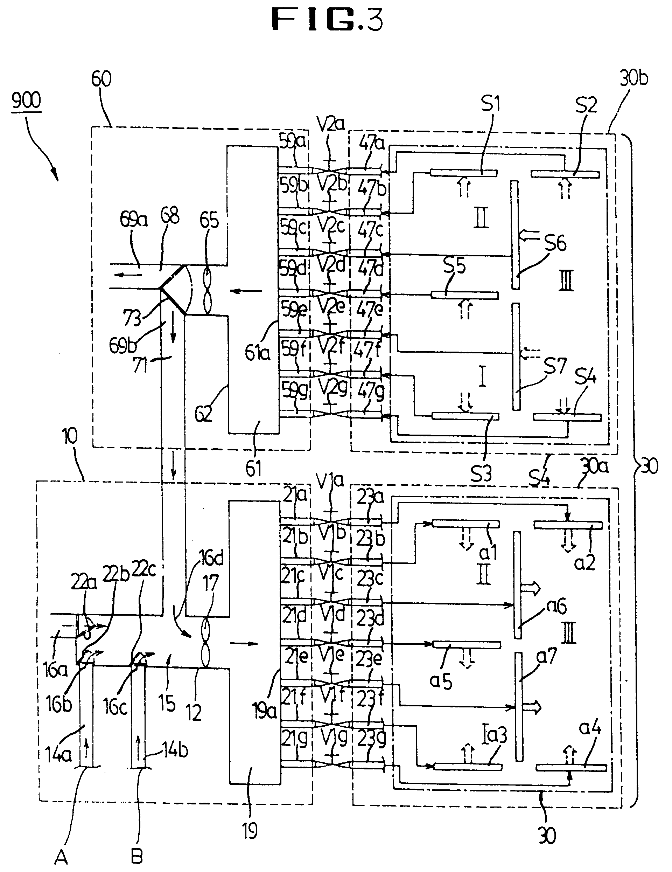

Figure 3 is a detailed view of the air curtain forming apparatus of the air conditioner shown in Figure 1.

The air curtain forming apparatus 900 has air feeder 10 for admitting outside air, cool air or warm air to be discharged into the interior 524 of the vehicle. Reference numeral 12 denotes an air-supply duct of the air feeder 10. On one side of the air-supply duct 12, a second inlet 16b and a third inlet 16c respectively connected to the cool-air intake conduit 14a and to the warm-air intake conduit 14b of the air conditioning part 500 are formed. Thus, the cool air and warm air in the air conditioning part 500 are admitted to the air-supply duct 12 by way of the cool-air intake conduct 14a and the warm-air intake conduit 14b. One end of the air-supply duct 12 is provided with a first inlet 16a capable of admitting the outside air. First, second and third dampers 22a, 22b and 22c pivotally swing about first, second and third inlets 16a, 16b and 16c respectively to open or close them. On the other side of the air-supply duct 12, a fourth inlet 16d for receiving the air discharged from an air exhauster 60, which will be described later, is formed. The other end of the air-supply duct 12 has a chamber 19 of a prescribed size. A first blower 17, eg, a blower motor, is mounted between first to fourth inlets 16a, 16b, 16c and 16d and the chamber 19. A plurality of first air branch tubes 21a, 21b, 21c, 21d, 21e, 21f and 21g is connected to a side wall 19a of the chamber 19. Consequently, the intake air entering from the first to fourth inlets 16a to 16d is discharged to a plurality of first air branch tubes 21a to 21g via the first blower 17. Each of the first air branch tubes 21a to 21g of said plurality is connected to a respective one of a plurality of automatic opening/closing valves V1a, V1b, V1c, V1d, V1e, V1f and V1g.

The air curtain forming apparatus 900 also has an air exhauster 60 provided with a discharge duct 62 for admitting the air and discharging the admitted air. A chamber 61 of a prescribed size is formed to one end of the discharge duct 62. A side wall 61a of the chamber 61 is connected to a plurality of second air branch tubes 59a, 59b, 59c, 59d, 59e, 59f and 59g through which the air is admitted into the chamber 61. On the other end of discharge duct 62, a first exhaust opening 69a for directly discharging the intake air, and a second exhaust opening 69b for supplying the intake air again to the air feeder 10 are provided. The air discharged via the second exhaust opening 69b of the discharge duct 62 flows into the fourth inlet 16d of the air-supply duct 12 via a circuitous tube 71. A damper 73 is installed within the discharge duct 62 which selectively opens and closes the first exhaust opening 69a and the second exhaust opening 69b. A second blower, eg, a blower motor, is provided between the chamber 61 and the first and second exhaust openings 69a and 69b. Each of the second air branch tubes 59a to 59g of said plurality is connected to a respective one of a plurality of automatic opening/closing valves V2a, V2b, V2c, V2d, V2e, V2f and V2g.

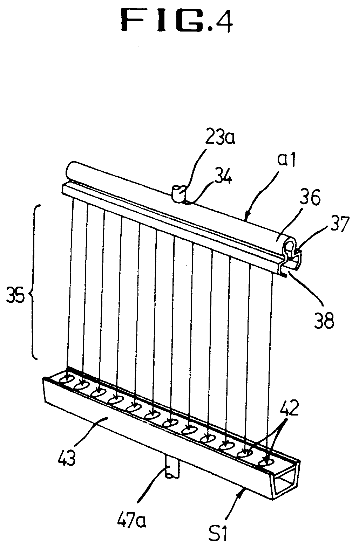

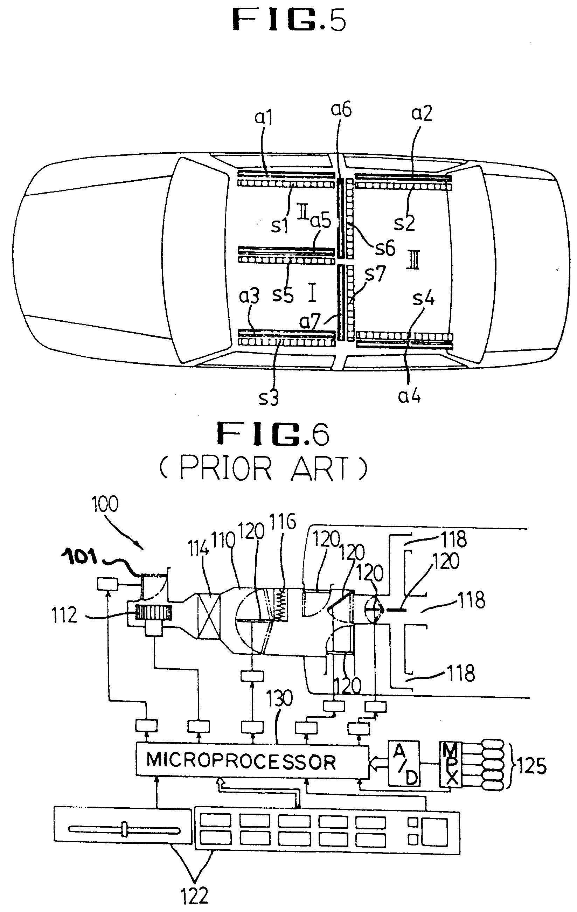

Air curtain forming apparatus 900 has an air curtain forming part 30. Figure 4 is a view for explaining the formation of the air curtain by the air spray nozzle and the air suction nozzle, and Figure 5 shows one embodiment of partitioning the interior 524 of the vehicle into a plurality of zones.

As is shown in Figure 3, air curtain forming part 30 is formed of air spray nozzle part 30a and air suction nozzle part 30b. The air spray nozzle part 30a is provided with a plurality of third air branch tubes 23a, 23b, 23c, 23d, 23e, 23f and 23g which are each connected to a respective one of the first air branch tubes 21a to 21g by way of the automatic opening/closing valves V1a to V1g. The air discharged from the first air branch tubes 21a to 21g is admitted into the third air branch tubes 23a to 23g via the automatic opening/closing valves V1a to V1g. The admitted air flows into a plurality of air spray nozzles a1, a2, a3, a4, a5, a6 and a7. Figure 4 shows the connection of one 23a of the third air branch tubes and a respective air spray nozzle a1. The other third air branch tubes 23b to 23g are similarly connected to the other air spray nozzles a2 to a7. Each of the air spray nozzles a1 to a7 have the same construction. As is shown in Figure 4, the air spray nozzle a1 is an elongate hollow body 36 of which one side is open in a lengthwise direction to form an opening 38. An air suction hole 34 connected to the third air branch tube 23a is formed in the upper centre of the body 36. A predetermined portion of the body 36 has a neck portion 37 to narrow the width of the hollow. Therefore, air entering the air suction hole 34 is discharged from the long opening 38 to form an air curtain 35. Such an air spray nozzle is disposed over each door (four doors in this embodiment) of the vehicle.

Reference numerals a1, a2, a3 and a4 denote the air spray nozzles arranged over the doors of the vehicle. Reference numerals a5, a6 and a7 denote the air spray nozzles which are respectively disposed between a driver's seat I and an assistant driver's seat II, between the assistant driver's seat II and a rear seat III, and between the driver's seat I and the rear seat III. Thus, the interior 524 of the vehicle can be partitioned into the zones of the driver's seat I, the assistant driver's seat II and the rear seat III by means of the air spray nozzles a1, a2, a3 and a4 at the door sides and the central air spray nozzles a5, a6 and a7.

The air discharged in the shape of an air curtain from the air spray nozzles a1 to a7 is drawn by the air suction nozzle part 30b which has a plurality of the air suction nozzles sl, s2, s3, s4, s5, s6 and s7. Figure 4 illustrates the air suction nozzle sl drawing the air curtain discharged by the air spray nozzle al. Reference numerals s2, s3, s4, s5, s6 and s7 denote the air suction nozzles installed on the bottom of the interior 524 of the vehicle corresponding to respective ones of the air spray nozzles a2 to a7. Each of the air suction nozzles s1 to s7 has substantially the same construction.

As can be seen in Figure 4, the air suction nozzle sl has a hollowed body 43 having a plurality of suction holes 42 in an upper portion thereof. An exhaust hole (not shown but identical to air suction hole 34 of the air spray nozzle) is formed in the bottom centre of the body 43. The exhaust hole of the body 43 is coupled to a fourth air branch tube 47a. Accordingly, the air is discharged to the fourth air branch tube 47a via the exhaust hole of the air suction nozzle s1. Reference numerals 47a, 47b, 47c, 47d, 47e, 47f and 47g denote the fourth air branch tubes which are each coupled to a corresponding air suction nozzle sl to s7. Each of the fourth air branch tubes 47a to 47g is connected to a respective automatic opening/closing valve V2a to V2g. Therefore, the air discharged from the fourth air branch tubes 47a to 47g is admitted to the air exhauster 60 via the automatic opening/closing valves V2a to V2g and the second air branch tubes 59a to 59g.

The operations of the air conditioner illustrated will now be described.

Air conditioner 1 enables the operation of air conditioning part 500 only. To operate only the air conditioning part 500, the button for mode 8 of the mode selector 950 is selected. By the selection of mode 8, the mode selector 950 outputs a mode-8 electric signal which is received by the microprocessor 800. Upon receipt of the mode-8 electric signal, the microprocessor 800 operates dampers 22b and 22c of the air feeder 10 to close the second inlet 16b and the third inlet 16c. Consequently air entering the air inlet 504 of the air conditioning part 500 is not admitted to the air feeder 10 of the air curtain forming apparatus 900. Temperature set button 614 of the temperature/operation controller 608 is manipulated to set the temperature for the interior 524 of the vehicle. If the automatic control button 610 is selected after setting the temperature, the microprocessor 800 recognises the selection of automatic control button 610. By doing so, the microprocessor 800 operates the blower 508 of the air conditioning part 500 to draw in the outside air (in case the outside air is drawn by selecting unshown button). In addition, the microprocessor 800 operates the evaporator 510 or the heater 512 in accordance with the temperature of interior 524 of the vehicle to cool or heat the drawn air. The cooled or heated air is discharged to the interior 514 of the vehicle via air outlets 516 of the air conditioning part 500.

The temperature/recognition sensor 700 installed in the interior 524 of the vehicle continuously monitors the temperature of the interior 524 of the vehicle to notify the temperature to the microprocessor 800. The microprocessor 800 monitors the temperature of the interior 524 of the vehicle and operates the evaporator 510 or the heater 512 to continuously cool or heat the air until the temperature of the interior 524 of the vehicle reaches the preset temperature. Thus, the air of the interior 524 of the vehicle is automatically cooled or heated to the preset temperature by the selection of the automatic control button 610.

When the cooling/heating selection button 612 is selected after setting the temperature, the microprocessor 800 recognises the selection of the cooling/heating selection button 612. By this operation, the microprocessor 800 recognises the blower 508 of the air conditioning part 500 to force the outside air to be drawn. At this time, if a cooling operation button (not shown) is selected, the microprocessor 800 recognises the selection of the cooling operation button and operates the evaporator 510 of the air conditioning part 500, thereby cooling the drawn air. The cooled air is discharged to the interior 524 of the vehicle via the air outlet 516 of the air conditioning part 500. As described above, the temperature/recognition sensor 700 installed in the interior 524 of the vehicle continuously monitors the temperature of the interior 524 of the vehicle to inform the microprocessor 800 of the temperature of the interior 524 of the vehicle. The microprocessor 800 monitors the temperature of the interior 524 of the vehicle and operates the evaporator 510 to cool the air of the interior 524 of the vehicle until the temperature of the interior 524 of the vehicle reaches the preset temperature. Therefore, the air of the interior 524 of the vehicle is cooled to the preset temperature by the selection of the cooling/heating selection button 612 and the cooling operation button.

If the cooling operation button is not selected, the microprocessor 800 operates the heater 512 of the air conditioning part 500 to heat the drawn air. The heated air is discharged to the interior 524 of the vehicle via the air outlet 516 of the air conditioning part 500. Also, the temperature/recognition sensor 700 installed in the interior 524 of the vehicle continuously monitors the temperature of the interior 524 of the vehicle to inform the microprocessor 800 of the temperature of the interior 524 of the vehicle. The microprocessor 800 monitors the interior 524 of the vehicle and operates the heater 512 to heat the air of the interior 524 of the vehicle until the temperature of the interior 524 of the vehicle reaches the preset temperature.

The amount of the air to be discharged to the interior 524 of the vehicle is regulated by the handling knob 606 of the air amount regulator 602, right to left or vice versa. Whilst all dampers installed in the air conditioning part 500 are not illustrated in detail in Figure 1, for example, the right to left movement of the knob 606 swings the damper 518. By the swinging of damper 518, the amount of air discharged to the air outlet 516 is controlled.

It will be appreciated from the above that when the interior 524 of the vehicle is cooled or heated by the operation of the air conditioning part 500 alone, the air conditioning part 500 may be controlled in a substantially similar manner to a conventional air conditioner.

Figure 5 shows the partitioning of the interior 524 of the vehicle into the plurality of zones. Reference symbols I, II and III respectively denote the driver's seat zone, the assistant driver's seat zone and the rear seat zone. When the driver's seat zone I is to be exclusively cooled or heated by the air conditioner, the button for mode 1 of the mode selector 950 is selected. By selection of mode 1, the mode selector 950 supplies a mode-1 electric signal to the microprocessor 800 which in turn operates the first blower 17 of the air feeder 10 and the second blower 65 of the air exhauster 60 in the air curtain forming apparatus 900. When the interior 524 of the vehicle is to be cooled, the microprocessor 800 opens the second inlet 16b, and closes the first and third inlets 16a and 16c and the air outlet 522 by the dampers 22a and 22c and damper 518, respectively. Then, the air cooled by the evaporator 510 of the air conditioning part 500 is admitted to the air feeder 10 via the cool-air intake conduit 14a. Simultaneously, the microprocessor 800 opens the automatic opening/closing valves V1d, V1e and V1g connected to the central air spray nozzles a5 and a7 and to the air spray nozzle a3 at the door side, and the automatic opening/closing valves V2d, V2e and V2g connected to the central air suction nozzles s5 and s7 and the air suction nozzle s3 at the door side. By this means, the cooled air entering the air feeder 10 is discharged to the air spray nozzles a3, a5 and a7 via the first air branch tubes 21d, 21e and 21g, the automatic opening/closing valves Vld, Vle and Vlg and the third air branch tubes 23d, 23e and 23g. Since the air entering the air spray nozzles a3, a5 and a7 is discharged to the air suction nozzles s3, s5 and s7 while forming the air curtain, the driver's seat zone I is separated from the assistant driver's seat zone II and the rear seat zone III. The air entering the air suction nozzles s3, s5 and s7 is admitted to the air exhauster 60 via the fourth air branch tubes 47d, 47e and 47g, the automatic opening/closing valves V2d, V2e and V2g and the second air branch tubes 59d, 59e and 59g. When the microprocessor 800 swings the damper 73 installed on the rear of the second blower 65 to close the first exhaust opening 69a and open the second exhaust opening 69b, the air of the air exhauster 60 is admitted to the air feeder 10 via the circuitous tube 71. At this time, the consumed amount of cool air supplied via the second inlet 16b of the air feeder 10 can be minimised. As described above, when the air curtain is formed around the driver's seat zone I, the assistant driver's seat zone II and the rear seat zone III are separated from the driver's seat zone I by the air curtain to effectively and instantly cool the driver's seat zone I.

When heating the interior 524 of the vehicle, the microprocessor 800 closes the first inlet 16a, the second inlet 16b and the air outlet 522 by means of the damper 22a, the damper 22b and the damper 518, respectively whilst opening the third inlet 16c. Accordingly, air heated by the heater 512 of the air conditioning part 500 is admitted to the air feeder 10 via the warm-air intake conduit 14b. The heated air entering the air feeder 10 circulates within the air conditioner 1 to heat the driver's seat zone I under the above-stated control of the microprocessor 800.

The following Table shows the operative or inoperative state of the air spray nozzles and the air suction nozzles for each mode selected by the mode selector 950. The operation of the automatic opening/closing valves Vla to Vlg and the operation of the dampers 16a, 16b, 16c, 518 and 73 to accord with the states described will be understood from the above description and from the drawings.

**Table**

| Mode | Cooling/heating zone | In operative state | | In inoperative state | |
|---|---|---|---|---|---|
| | | air spray nozzle | air suction nozzle | air spray nozzle | air suction nozzle |
| 1 | driver's seat (I) | a3, a5, a7 | s3, s5, s7 | a1, a2, a4, a6 | s1, s2, s4, s6 |
| 2 | assistant driver's seat (II) | a1, a5, a6 | s1, s5, s6 | a2, a3, a4, a7 | s2, s3, s4, s7 |
| 3 | rear seat (III) | a2, a4, a6, a7 | s2, s4, s6, s7 | a1, a3, a5 | s1, s3, s5 |
| 4 | I and II | a1, a3, a6, a7 | s1, s3, s6, s7 | a2, a4, a5 | s2, s4, s5 |
| 5 | I and III | a2, a3, a4, a5, a6 | s2, s3, s4, s5, s6 | a1, a7 | s1, s7 |
| 6 | II and III | a1, a2, a4, a5, a7 | s1, s2, s4, s5, s7 | a3, a6 | s3, s6 |
| 7 | I, II and III | a1, a2, a3, a4 | s1, s2, s3, s4 | a5, a6, a7 | s5, s6, s7 |
| 8 | Only air-conditioning part | | | | |
| 9 | Automatic selection | | | | |

In the above Table, modes 2, 3, 6 and 7 may be more effective in blocking the spreading of cigarette smoke nearby as well as in performing the cooling and heating restricted to the corresponding zone. Mode 7 in particular can give the effect of blocking the entry of outside air while opening of the door of the vehicle.

The automatic selection of mode 9 is carried out as follows. More specifically, upon the selection of the button for mode 9 in the mode selector 950, the temperature/recognition sensor 700 monitors the corresponding zone of the passengers together with the temperature information signal and provides the passenger recognition signal to the microprocessor 800. The passenger is recognised by sensing the weight, by infrared rays or by the amount of oxygen. The microprocessor 800 receives the passenger recognition signal and executes the operation from mode 1 to mode 7 set out in the Table.

In the above embodiment, the air conditioner 1 is furnished with seven air spray nozzles a1 to a7 and seven air suction nozzles s1 to s7. Of course, the present invention is not confined to this number and indeed any methods for forming an air curtain and/or for supplying air to certain zones may be utilised.

When the interior of the vehicle is not to be cooled or heated, for example, as in spring or autumn, the outside air is forcibly admitted via the first inlet 16a to form an air curtain at a certain zone. Then, the zone may be established as a smoking zone, with the other zones determined as no-smoking zones. The cigarette smoke cannot pass through the air curtain in the case of smoking in the prescribed zone partitioned by the air curtain, so that the cigarette smoke remains in the smoking zone to permit the other zones to be affected by only a slight amount of the smoke, thereby preserving a non-smoker's health and relieving an unpleasant atmosphere.

In the air conditioner described above, a zone to be cooled or heated is set in the internal space of a vehicle, and the set zone is separated from the other zones by means of an air curtain, and the preset corresponding zone is cooled or heated by the air conditioner. Therefore, unnecessary cooling or heating of other zones is not required while securing a preset zone temperature in the vehicle within a short time. Furthermore, there is an additional effect that the internal space may be separated into a smoking zone and non-smoking zone to create a pleasant indoor atmosphere as well as to preserve passenger health.

While the present invention has been particularly shown and described with reference to particular embodiments thereof, it will be understood by those skilled in the art that various changes in form and details may be effected without departing from the scope of the invention as defined by the appended claims.

## Claims

1. An air conditioner for a vehicle comprising an air conditioning unit for conditioning air and discharging the conditioned air, and an air feeding unit for receiving the conditioned air discharged by said air conditioning unit and feeding said conditioned air to the interior of a vehicle, wherein said air feeding unit is arranged to supply air selectively to one or more of a plurality of zones within the interior of the vehicle.

2. An air conditioner as claimed in claim 1, wherein said air feeding unit comprises air curtain forming apparatus having an air supply duct and a corresponding air receiving duct spaced from and facing said air supply duct, wherein said air receiving duct has suction means arranged to draw air from said air supply duct to said air receiving duct.

3. An air conditioner as claimed in claim 2, wherein a plurality of air spray nozzles are provided in said air supply duct.

4. An air conditioner as claimed in any preceding claim, wherein said air conditioning unit comprises heating means for heating the air discharged thereby.

5. An air conditioner as claimed in any preceding claim, further comprising sensing means for monitoring the temperature in the interior of a vehicle and/or recognising the position of a passenger in the interior of a vehicle, wherein said air conditioning unit is arranged to condition air in response to an output from said sensing means.

6. An air conditioner as claimed in any preceding claim, further comprising a control signal generator for generating an air amount regulation signal for regulating the amount of air admitted to the interior of a vehicle, and a preset temperature signal for setting the temperature of the conditioned air discharged by said air conditioning unit, and a controller for said air conditioning unit arranged to receive said air amount regulation signal, and said preset temperature signal and to control said air conditioning unit in response thereto.

7. An air conditioner as claimed in claim 6, further comprising sensing means for monitoring the temperature in the interior of a vehicle and/or recognising the position of a passenger in the interior of a vehicle, wherein said controller for said air conditioning unit is also arranged to be responsive to said sensing means to control said air conditioning unit.

8. An air conditioner for forming an air curtain comprising:
an air conditioning part for drawing in outside air, cooling or heating the drawn air, and discharging the cooled or heated air;
an air curtain forming apparatus for admitting said cooled or heated air discharged from said air conditioning part, and spraying said cooled or heated air at plural positions or a specific position of an interior of a vehicle to form said air curtain for performing the cooling or heating operation;
a temperature/recognition sensing part for monitoring a temperature of said interior of said vehicle to output a temperature information signal, and monitoring the position of a passenger in said interior of said vehicle to output a passenger recognition signal;
a mode selecting part for controlling the discharge of said cooled or heated air of said air conditioning part, and controlling the spraying position of said air curtain of said air curtain forming apparatus;
a temperature/operation controlling part for outputting an air-amount regulation signal for regulating the amount of the air admitted to said interior of said vehicle, a cooling/heating selection signal for selecting the cooling or heating of said air drawn to said air conditioning part, and a preset temperature signal for setting a cooling temperature or heating temperature of said drawn air; and
an air-conditioner controlling part for receiving said temperature information signal and passenger recognition signal of said temperature/recognition sensing part, said mode control signal of said mode selecting part, said air-amount regulation signal, cooling/heating selection signal and preset temperature signal of said temperature/operation controlling part to control said air conditioning part and air curtain forming apparatus.

9. The air conditioner for forming an air curtain as claimed in claim 8, wherein said air conditioning part comprises:
an air conditioning duct having an air inlet on one end thereof and a plurality of air outlets on the other end thereof for admitting the air from outside, and discharging said admitted air to said air curtain forming apparatus;
a first blower arranged to be opposite to said air inlet for drawing in said air from outside;
an evaporator arranged on the rear of said first blower for cooling said admitted air during performing said cooling operation;
a heater arranged on the rear of said evaporator for heating said admitted air during performing said heating operation; and
a plurality of dampers for controlling the air flow in said air conditioning duct, and regulating the amount of said air discharged from said air conditioning duct.

10. The air conditioner for forming an air curtain as claimed in claim 9, wherein said air conditioning duct includes a cool-air outlet between said evaporator and heater, and a warm-air outlet and a plurality of air outlets on the rear of said heater, said cool-air outlet and warm-air outlet respectively being connected to a cool-air intake conduit and a warm-air intake conduit connected to said air curtain forming apparatus, said plurality of air outlets being connected to said interior of said vehicle.
